(19) **Europäisches Patentamt**
**European Patent Office**
**Office européen des brevets**

(11) **EP 1 254 872 A1**

(12) **EUROPEAN PATENT APPLICATION**
published in accordance with Art. 158(3) EPC

(43) Date of publication:
**06.11.2002 Bulletin 2002/45**

(51) Int Cl.⁷: **C03C 27/06**, E06B 3/66

(21) Application number: **01901378.8**

(22) Date of filing: **17.01.2001**

(86) International application number:
**PCT/JP01/00252**

(87) International publication number:
**WO 01/055045 (02.08.2001 Gazette 2001/31)**

(84) Designated Contracting States:
**AT BE CH CY DE DK ES FI FR GB GR IE IT LI LU MC NL PT SE TR**

(30) Priority: **28.01.2000 JP 2000020874**

(71) Applicant: **Nippon Sheet Glass Co., Ltd.**
**Osaka-shi, Osaka 541-0041 (JP)**

(72) Inventors:
• **KATO, Hidemi, NIPPON SHEET GLASS CO., LTD.**
**Osaka-shi, Osaka 541-0041 (JP)**

• **KINOSHITA, Taito,**
**NIPPON SHEET GLASS CO., LTD.**
**Osaka-shi, Osaka 541-0041 (JP)**

(74) Representative: **Power, Philippa Louise**
**Frank B. Dehn & Co.,**
**179 Queen Victoria Street**
**London EC4V 4EL (GB)**

(54) **DOUBLE GLAZING UNIT FOR WINDOWS**

(57)      Double glazing unit (10) for windows, comprising two sheets of flat glass spaced a given distance from each other with a hollow layer (13) interposed therebetween. One flat glass (12) is thick, while the other flat glass (11) is thinner than the thicker flat glass. One flat glass (12) has a higher mechanical strength than the other flat glass (11) when the former is made as thick as the latter. Heat strengthened glass or toughened glass is used as the thicker flat glass (12). Float glass or wired glass used as the thinner flat glass (11). Thereby, the overall width of the double glazing unit is held down while the double glazing unit (10) has a high wind-pressure resisting strength.

FIG.1

**Description**

TECHNICAL FIELD

This invention relates to improvements in a double glazing unit for windows.

BACKGROUND ART

Double glazing units of the structure having two sheets of glass of different thicknesses are known as proposed in Japanese Patent Laid-open Publication No. 7-42451, entitled "DOUBLE GLASING UNIT FOR BUILDINGS", Japanese Patent Publication No. SHO-60-4146, entitled "LIGHT-TRANSMISSIBLE PANEL", and Japanese Patent Laid-Open Publication No. HEI-2-289451, entitled "SOUND-INSULATINHG WINDOW GLASS FOR VEHICLE".

The double glazing unit disclosed in Japanese Patent Laid-Open Publication No. HEI-7-42451 is characterized in that an outside glass sheet has a reflective film on its inside surface, and the thickness of an inside glass sheet is less than 70% of that of the outside glass pane. When a gas sealed between the inside and outside glass sheets undergoes thermal expansion, the inside glass sheet is caused to bend or deflect greatly thereby to suppress deflection of the outside glass sheet. This leads to a suppressed deflection of the reflective layer, so that the problem of distortion on the reflected images does not occur.

The light-transmissible panel disclosed in Japanese Patent Publication No. SHO-60-4146 is composed of a double glazing unit having two sheets of glass spaced a given distance from each other. One of the glass sheets has a mass per unit area which is more than 1.2 times as large as that of the other glass sheet. This arrangement has remarkably improved acoustic insulation properties comparable to that of the normal double glazing unit having two glass sheets of the same thickness.

Japanese Patent Laid-Open Publication No. HEI-2-289451 shows a window glass having two monolithic glass sheets whose thickness values differ from one another by, in one embodiment, more than 20% and, in another embodiment, more than 40%. In either embodiment, the glass window exhibits good acoustic insulation performances which are comparable to those attained by the arrangement shown in Japanese Patent Publication No. SHO-60-4146.

When the double glazing units shown in Japanese Patent Laid-open Publication No. HEI-7-42451, Japanese Patent Publication No. SHO-60-4146 and Japanese Patent Laid-open Publication No. 2-289451 are used as a window glass with one glass sheet exposed directly to the outside air, this glass sheet is subjected to a wind load or pressure acting directly thereon. The double glazing units shown in these Japanese documents, however, give no consideration to the wind load. The wind load is stipulated by the Building Standards Act and represented by a wind pressure derived from a wind velocity sufficiently higher than those produced by typhoons.

As discussed above, the double glazing unit shown in Japanese Patent Laid-open Publication No. HEI-7-42451 provides appropriate measures to deal with the problem occurring when the sealed gas expands, and Japanese Patent Publication No. SHO-60-4146 and Japanese Patent Laid-open Publication No. HEI-2-289451 propose double glazing units with improved acoustic insulation properties. All of the double glazing units discussed above require a thickness so increased as to withstand the desired wind load, if not so, they cannot be used as window glass.

However, merely increasing the thickness of glass panes will give rise to a problem that a resulting double glazing unit becomes heavy and hence requires more cost for processing and working thereof. Additionally, since the unit including the central air (gas) layer becomes large in thickness, the thickness of a window frame is also enlarged. This will exert a great influence on the design of a building.

It is accordingly an object of the present invention to provide a double glazing structure for windows, which is capable of holding down its overall thickness while keeping a wind-pressure resisting strength required for window panes.

DISCLOSURE OF THE INVENTION

According to an aspect of the present invention, there is provided a double glazing unit for windows, comprising two sheets of glass disposed in parallel and spaced a given distance from each other, with the glass sheets being peripherally sealed by a spacer and a sealing material so as to entrap dry gas within a hollow layer interposed between the glass sheets, one glass sheet being a thick glass sheet while the other glass sheet being a thin glass sheet smaller in thickness than the thick glass sheet, characterized in that the thick glass sheet has a higher mechanical strength than the thin glass sheet.

In the double glazing unit of the present invention, a wind load is born by two glass sheets. It is known that the load sharing ratio of the two glass sheets is represented by the ratio of cube thickness of one glass sheet to cube thickness of the other glass sheet. Thus, the load sharing ratio of the thick glass sheet relative to the thin glass sheet becomes extremely high. Accordingly, if an attempt is made to increase the wind-pressure resisting strength by further increasing the thickness of the thick glass sheet, an effective increase in the wind-pressure resisting strength cannot be obtained as compared with an increase in the overall thickness of the double glazing unit. In view of this, instead of further increasing the thickness of the thick glass sheet, a sort of glass with higher mechanical strength, such as heat strengthened glass or toughened glass is used as the thick glass sheet. With this arrangement, the double glazing unit has a high wind-pressure resisting strength, and an increase in the total thickness of the double glazing unit can be held down.

The thin glass sheet comprises float glass or wired glass, and the thick glass sheet comprises heat strengthened glass or toughened glass. The heat strengthened glass has a strength which is about two times as large as the strengths of the float glass and wired glass. The toughened glass has a larger strength than the heat strengthened glass, such as three to five times as large as the strengths of the float glass and wired glass. The float glass, wired glass, heat strengthened glass and toughened glass are widely distributed to the market and can be readily available. Accordingly, a further increase in cost of the double glazing unit can be avoided.

BRIEF DESCRIPTION OF THE DRAWINGS

[0013]

　　FIG. 1 is a perspective view, with parts in cross section, of a portion of a double glazing unit according to the present invention; and
　　FIGS. 2A and 2B are views illustrative of the operation of the double glazing unit shown in FIG. 1.

BEST MODE FOR IMPREMENTING THE INVENTION

Certain preferred embodiments of the present invention will be described below in greater detail with reference to the accompanying sheets of drawings.

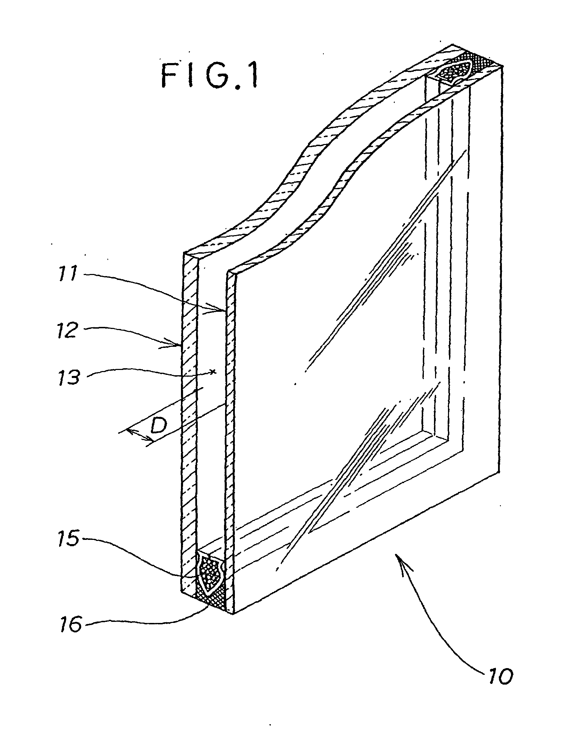

Referring now to FIG. 1, there is shown a double glazing unit 10 for windows (hereinafter referred to as "double glazing unit") according to the present invention. The double glazing unit 10 comprises a thin glass sheet 11 and a thick glass sheet 12 which is larger in thickness than the thin glass sheet 11 and has a higher mechanical strength than the thin glass sheet 11. The thin and thick glass sheets 11 and 12 are held in parallel and spaced a given distance D from each other. A hollow layer 13 interposed between the two glass sheets 11, 12 contains dry gas trapped therein. The glass sheets 11, 12 are peripherally sealed by a spacer 15 and a sealing material so as to close or seal the hollow layer 13. The spacer 15 is filled with a desiccating agent.

In one concrete form of the invention, the thin glass sheet 11 comprises float glass or wired glass, and the thick glass sheet 12 comprises heat strengthened glass or toughened glass. The heat strengthened glass has a mechanical strength which is about two times as large as that of the float glass and the wired glass. The toughened glass has a higher mechanical strength than the heat strengthened glass. Since the float glass, wired glass, heat strengthened glass and toughened glass are widely distributed to the market and can be readily available, it is possible to suppress cost-increase of the double glazing unit.

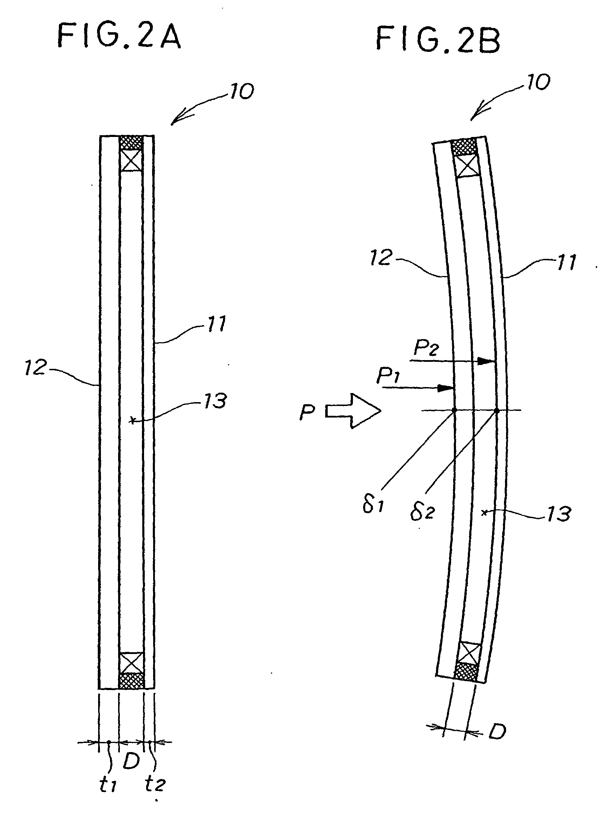

Operation of the double glazing unit 10 will be described with reference to FIGS. 2A and 2B. In the double glazing unit 10 shown in these figures, the thick glass sheet 12 is shown as a glass sheet adapted to directly receive a wind pressure. The present invention is not limited to the illustrated arrangement but may include another arrangement in which the thin glass sheet 11 is directly subjected to the wind pressure. In the latter case, the same effect can be attained by the double glazing unit 10. It is, therefore, not a requirement that the thick and thin glass sheets 12 and 11 are to be disposed on the outdoor side and indoor side, respectively, of a window. In other word, either side of the double glazing unit 10 can be sued as an indoor side or an outdoor side of the window.

In FIG. 2, the double glazing unit 10 is diagrammatically shown as essentially consisting of a thick glass sheet 12 of a thickness $t_1$ and a thin glass sheet 11 of a thickness $t_2$ (where $t_2 < t_1$).

Now assuming that when the double glazing unit is subjected to a wind pressure P, thick and thin glass sheets 12 and 11 undergo deflection as denoted by $\delta_1$ and $\delta_2$, respectively. In this case, it may be considered that the deflections $\delta_1$ and $\delta_2$ are respectively produced by the effect of components (sharing wind pressures) $P_1$ and $P_2$ of the wind pressure P acting on the thick and thin glass sheets 12, 11, respectively. The deflection is direct proportional to the load and inversely proportional to the third power of the thickness. Therefore, the deflections $\delta_1$ and $\delta_2$ may be given by the following expression (1).

$$\delta_1 = m(P_1/t_1{}^3) \qquad \delta_2 = m(P_2/t_2{}^3) \qquad\qquad (1)$$

where $t_1$ and $t_2$ are thicknesses of the glass sheets 12 and 11, and m is a constant. Since $P_1$ and $P_2$ are sharing wind pressures, which are equal to components of the wind pressure P, the following expression (2) holds for the sharing wind pressures.

$$P = P_1 + P_2 \qquad (2)$$

Since the spacing between the two glass sheets of the double glazing unit is sufficiently small and a volumetric change occurring at the inter-glass space can be neglected, we assume that $\delta_1$ and $\delta_2$ are approximately equal to each other, as indicated by the following expression (3).

$$\delta_1 = \delta_2 \qquad (3)$$

From the expressions (1), (2) and (3), we can obtain the following expression (4).

$$P_1 = P \times \frac{t_1{}^3}{t_1{}^3 + t_2{}^3} \qquad P_2 = P \times \frac{t_2{}^3}{t_1{}^3 + t_2{}^3} \qquad (4)$$

From the expression (4), we see that the ratio of the wind pressure P1 born by the glass sheet 12 to the wind pressure P2 born by the glass sheet 11 is expressed as the ratio of the cube thickness of the glass sheet 12 to the cube thickness of the glass sheet 11. The allowable wind pressure PP of a single glass sheet is represented by the following expression (5).

$$PP = \frac{K}{FA}\left(t + \frac{t^2}{4}\right) \qquad \ldots\ldots(5)$$

where K is a constant representing a mechanical strength of the glass sheet, which may be variable with sorts of glass, F is a safety factor, A is an area of the glass sheet, and t is a thickness of the glass sheet. Substitution of these values for each of the glass sheets 12, 11 of the double glazing unit gives the following expression (6).

$$PP_1 = \frac{K_1}{FA}\left(t_1 + \frac{t_1{}^2}{4}\right) \qquad PP_2 = \frac{K_2}{FA}\left(t_2 + \frac{t_2{}^2}{4}\right) \qquad \ldots\ldots(6)$$

where $PP_1$ and $PP_2$ are allowable wind pressures born by the glass sheets 12, 11 when they are used separately, and $K_1$ and $K_2$ are constants representing mechanical strengths of the glass sheets 12 and 11. The safety factor F and the area A each have the same value for both glass sheets 12, 11.

When the glass sheets 12 and 11 are used in combination so as to form a double glazing unit, a total wind pressure born by the double glazing unit and sharing wind pressures born by the respective glass sheets are related to each other as represented by the expression (4). Therefore, from the expressions (4) and (6), we can obtain the following expressions (7) and (8).

$$PP' = \frac{K_1}{FA}\left(t_1 + \frac{t_1{}^2}{4}\right)\left(1 + \frac{t_2{}^3}{t_1{}^3}\right) \qquad \ldots\ldots(7)$$

$$PP'' = \frac{K_2}{FA}\left(t_2 + \frac{t_2{}^2}{4}\right)\left(1 + \frac{t_1{}^3}{t_2{}^3}\right) \qquad .....(8)$$

where PP' is a total wind pressure on the double glazing unit when the allowable wind pressure $PP_1$ acts on the glass sheet 12, and PP" is a total wind pressure on the double glazing unit when the allowable wind pressure $PP_2$ acts on the glass sheet 11. When considering the double glazing unit as a whole, both glass sheets 12 and 11 are required to satisfy the allowable wind pressure of the double glazing unit. Accordingly, a smaller one of the values obtained from the expressions (7) and (8) is taken as an allowable wind pressure PP of the double glazing unit, as represented by the following expression (9).

$$PP = min(PP', PP'') \tag{9}$$

Description will continue using the expressions (7) to (9).

First, an investigation of the allowable wind pressure is made for various materials specified for the glass sheets 11 and 12. For the thick glass sheet 12, three different sorts of glass, i.e., float glass (Comparative Example), heat strengthened glass (Embodiment) and toughened glass (Embodiment) are used for investigation. For the thin glass sheet 11, float glass and wired glass (Comparative Example and Embodiment) are used for investigation. By substituting appropriate values into the expressions, values of PP' and PP" are obtained. In calculating the allowable wind pressure, the safety factor F and area A are set to be common to the thick and thin glass sheets 12 and 11 and they are calculated in the form of symbols. The constants $K_1$, $K_2$ indicating the mechanical strengths of the glass sheets are substituted by $K_0$ the value of which may vary depending on relative mechanical strengths of the sorts of glass used. For the float glass and wired glass, $K_0$ is given. In case of the heat strengthened glass, $K_0$ is doubled. For the toughened glass, $K_0$ is three-folded. The constant $K_0$ is calculated in the form of a symbol.

Discussion will be first given to certain examples in which a thin glass sheet 11 is made of float glass.

Comparative Example 1

Basic Structure: double glazing unit composed of a glass sheet of 6 mm thick and a glass sheet of 3 mm thick
Thick glass sheet:
      Sort of glass: float glass of 6 mm thick

$$t_1 = 6$$

$$K_1 = K_0$$

Thin glass sheet:
      Sort of glass: float glass of 3 mm thick

$$t_2 = 3$$

$$K_2 = K_0$$

$$PP' = 16.875\frac{K_0}{FA} \qquad PP'' = 47.250\frac{K_0}{FA} \tag{10}$$

A smaller one of the values PP' and PP" shown in the expression (10) is taken as an allowable wind pressure, as stated above. Accordingly, in this Example, PP is represented by the following expression (11)

$$PP = 16.875\frac{K_0}{FA} \qquad (11)$$

Inventive Example 1

Basic Structure: double glazing unit composed of a glass sheet of 6 mm thick and a glass sheet of 3 mm thick
Thick glass sheet:
    Sort of glass: heat strengthened glass of 6 mm thick

$$t_1=6$$

$$K_1,= 2 \times K_0$$

Thin glass sheet:
    Sort of glass: float glass of 3 mm thick

$$t_2=3$$

$$K_2=K_0$$

$$PP'= 33.750\frac{K_0}{FA} \qquad PP''= 47.250\frac{K_0}{FA} \qquad (12)$$

Since a smaller one of the values PP' and PP'' shown in the expression (12) is taken as an allowable wind pressure, the PP value in this Example is represented by the following expression (13)

$$PP = 33.750\frac{K_0}{FA} \qquad (13)$$

Inventive Example 2

Basic Structure: double glazing unit composed of a glass sheet of 6 mm thick and a glass sheet of 3 mm thick
Thick glass sheet:
    Sort of glass: toughened glass of 6 mm thick

$$t_1=6$$

$$K_1,= 3 \times K_0$$

Thin glass sheet:
    Sort of glass: float glass of 3 mm thick

$$t_2=3$$

$$K_2=K_0$$

$$PP'=50.625\frac{K_0}{FA} \qquad PP''=47.250\frac{K_0}{FA} \qquad (14)$$

Since a smaller one of the values PP' and PP" shown in the expression (14) is taken as an allowable wind pressure, the PP value in this Example is represented by the following expression (15)

$$PP= 47.250\frac{K_0}{FA} \qquad (15)$$

In Comparative Example 1, in which two float glass sheets are used in combination, the allowable wind pressure is 16.875($K_0$/FA). In Inventive Example 1, in which the heat strengthened glass sheet and the float glass sheet are used in combination, the allowable wind pressure increases to 33.750 ($K_0$/FA). Likewise, in Inventive Example 2, in which the toughened glass sheet and the float glass sheet are used in combination, the allowable wind pressure increases to 47.250 ($K_0$/FA).

The allowable wind pressure of the double glazing unit composed of two float glass sheets can be increased to values comparable to those of Inventive Examples 1 and 2. In one effective way of achieving this, the thick glass sheet is further thickened, as will be discussed below.

Comparative Example 2

Basic Structure: double glazing unit composed of a glass sheet of 10 mm thick and a glass sheet of 3 mm thick
Thick glass sheet:
   Sort of glass: float glass of 10 mm thick

$$t_1=10$$

$$K_1=K_0$$

Thin glass sheet:
   Sort of glass: float glass of 3 mm thick

$$t_2=3$$

$$K_2=K_0$$

$$PP'=35.945\frac{K_0}{FA} \qquad PP''=199.694\frac{K_0}{FA} \qquad (16)$$

Since a smaller one of the values PP' and PP" shown in the expression (16) is taken as an allowable wind pressure, the PP value in this Example is represented by the following expression (17)

$$PP = 35.945\frac{K_0}{FA} \qquad (17)$$

In the Comparative Example 2, an allowable wind pressure which is comparable to that of Inventive Example 1 is obtained by increasing the thickness of the thick glass sheet. However, in the case of Inventive Example 1, the total thickness of the double glazing unit is 21 mm (=6+12+3) provided that the thickness of the hollow layer is 12 mm. On the other hand, in the case of Comparative Example 2, the total thickness of the double glazing unit is 25 mm (=10+12+3).

Furthermore, a very high allowable wind pressure, such as PP"=199.694 ($K_0$/FA), of the thin glass sheet is promised, however, this value cannot be used as an actual allowable wind pressure. The double glazing unit of Comparative Example 2 is, therefore, evaluated as wasteful and ill balanced as a whole.

Comparative Example 3

Basic Structure: double glazing unit composed of a glass sheet of 12 mm thick and a glass sheet of 3 mm thick
Thick glass sheet:
Sort of glass: float glass of 12 mm thick

$$t_1 = 12$$

$$K_1 = K_0$$

Thin glass sheet:
Sort of glass: float glass of 3 mm thick

$$t_2 = 3$$

$$K_2 = K_0$$

$$PP' = 48.750\frac{K_0}{FA} \qquad PP" = 341.250\frac{K_0}{FA} \qquad (18)$$

A smaller one of the values PP' and PP" shown in the expression (18) is taken as an allowable wind pressure, as stated above. Accordingly, the PP value in this Example is represented by the following expression (19)

$$PP = 48.750\frac{K_0}{FA} \qquad (19)$$

In the Comparative Example 3, an allowable wind pressure, which is comparable to that of Inventive Example 2, is obtained by further increasing the thickness of the thick glass sheet. However, in the case of Inventive Example 2, the total thickness of the double glazing unit is 21 mm (=6+12+3) provided that the thickness of the hollow layer is 12 mm. On the other hand, in the case of Comparative Example 3, the total thickness of the double glazing unit increases up to 27 mm (=12+12+3).

Furthermore, an extremely high allowable wind pressure, such as PP"=341.250($K_0$/FA), of the thin glass sheet is promised, however, this value cannot be used as an actual allowable wind pressure. Thus, the double glazing unit of Comparative Example 3 is also evaluated as wasteful and ill balanced as a whole.

Discussion will be next given to certain examples in which wired glass is used as a thin glass sheet 11.

Comparative Example 4

Basic Structure: double glazing unit composed of a glass sheet of 12 mm thick and a glass sheet of 6.8 mm thick
Thick glass sheet:
Sort of glass: float glass of 12 mm thick

$$t_1 = 12$$

$$K_1 = K_0$$

Thin glass sheet:
Sort of glass: wired glass of 6.8 mm thick

$$t_2 = 6.8$$

$$K_2 = K_0$$

$$PP' = 56.734\frac{K_0}{FA} \qquad PP'' = 119.260\frac{K_0}{FA} \tag{20}$$

A smaller one of the values PP' and PP'' shown in the expression (20) is taken as an allowable wind pressure, as stated above. Accordingly, in this Example, PP is represented by the following expression (21)

$$PP = 56.734\frac{K_0}{FA} \tag{21}$$

Inventive Example 3

Basic Structure: double glazing unit composed of a glass sheet of 12 mm thick and a glass sheet of 6.8 mm thick
Thick glass sheet:
Sort of glass: heat strengthened glass of 12 mm thick

$$t_1 = 12$$

$$K_1 = 2 \times K_0$$

Thin glass sheet:
Sort of glass: wired glass of 6.8 mm thick

$$t_2 = 6.8$$

$$K_2 = K_0$$

$$PP' = 113.468\frac{K_0}{FA} \qquad PP'' = 119.260\frac{K_0}{FA} \tag{22}$$

Since a smaller one of the values PP' and PP" shown in the expression (22) is taken as an allowable wind pressure, the PP value in this Example is represented by the following expression (23)

$$PP = 113.468\frac{K_0}{FA} \tag{23}$$

In Comparative Example 4, in which the float glass sheet and the wired glass sheet are used in combination, the allowable wind pressure is 56.734($K_0$/FA). In Inventive Example 3, in which the heat strengthened glass sheet and the wired glass sheet are used in combination, the allowable wind pressure increases up to 113.468 ($K_0$/FA).

The allowable wind pressure of the double glazing unit composed of a combination of the float glass and the wired glass can be increased to a value comparable to that of Inventive Example 3. One effective way of achieving this is further increasing the thickness of the float glass sheet in a manner as discussed below.

Comparative Example 5

Basic Structure: double glazing unit composed of a glass sheet of 19 mm thick and a glass sheet of 6.8 mm thick
Thick glass sheet:
    Sort of glass: float glass of 19 mm thick

$$t_1 = 19$$

$$K_1 = K_0$$

Thin glass sheet:
    Sort of glass: wired glass of 6.8 mm thick

$$t_2 = 6.8$$

$$K_2 = K_0$$

$$PP' = 114.258\frac{K_0}{FA} \qquad PP'' = 418.864\frac{K_0}{FA} \tag{24}$$

Since a smaller one of the values PP' and PP" shown in the expression (24) is taken as an allowable wind pressure, as stated above, the PP value in this Example is represented by the following expression (25)

$$PP = 114.258\frac{K_0}{FA} \tag{25}$$

In the Comparative Example 5, an allowable wind pressure, which is comparable to that of Inventive Example 3, is obtained by further increasing the thickness of the float glass sheet. However, in the case of Inventive Example 3, the total thickness of the double glazing unit is 30.8 mm (=12+12+6.8) provided that the thickness of the hollow layer is 12 mm. On the other hand, in the case of Comparative Example 5, the total thickness of the double glazing unit increases up to 37.8 mm (=19+12+6.8).

Furthermore, an extremely high allowable wind pressure, such as PP"=418.864($K_0$/FA), of the thin glass sheet is promised, however, this value cannot be used as an actual allowable wind pressure. The double glazing unit of Comparative Example 5 is, therefore, evaluated as wasteful and ill balanced as a whole.

Considering the foregoing Comparative Examples 1 to 5 and Inventive Examples 1 to 3, the following will be found.

Firstly, in a double glazing unit composed of two sheets of glass of different thicknesses, when both glass sheets are formed from the materials with comparable mechanical strengths (such as a combination of two float glass sheets, a combination of a float glass sheet and a wired glass sheet, or a combination of two heat strengthened glass sheets), the actual allowable wind pressure is determined by the thick glass sheet. This means that the actual allowable wind pressure does not increase with an increase in the total thickness of the double glazing unit.

Secondly, because two glass sheets share the wind pressure in the ratio of the cube thickness of one glass sheet to the cube thickness of the other glass sheet, it is effective to avoid further increasing the thickness of the thick glass sheet and to replace the thick glass sheet with another glass sheet having a higher mechanical strength.

Thirdly, it is preferable to choose the materials in such a manner that the thin glass sheet have a small K value and the thick glass sheet has a large K value.

Regarding the thickness of two glass sheets forming a double glazed unit of the present invention, it is optional whether to choose the thickness of the thin glass sheet from among standardized values including 3, 4, 5, 6.8, 8, 10, 12, 15 and 19 mm, or to use a given value arbitrarily set as a thickness of a tailor-made thin glass sheet. The thickness of the thick glass sheet is determined by adding an appropriate value to the thickness of the thin glass sheet. Thus, the two glass sheets receive no specific restriction in terms of the thickness.

INDUSTRIAL APPLICABILITY

As described above, the double glazing unit according to the present invention has two glass sheets of different thicknesses, and a thicker one of the glass sheets has a higher mechanical strength than a thinner glass sheet. This is because an attempt to increase the wind-pressure resisting strength by further increasing the thicker glass sheet has failed to increase the wind-pressure resisting strength to an effective degree in comparison with an increase in the total thickness of the double glazing unit. According to the present invention, further thickening of the thicker glass sheet is avoided, and a sort of glass having a high mechanical strength, such as heat strengthened glass or toughened glass, is used as the thicker glass sheet. This ensures that a large wind-pressure resisting strength is obtained while limiting an increase in the total thickness of the double glazing unit. Since further increasing of the thickness of the thicker glass sheet can thus be held down, it is possible to prevent further increasing of the overall weight of the double glazing unit, which will otherwise incur an additional processing and working cost. The double glazing unit of the present invention is particularly useful when embodied in windowpanes of multistory buildings.

Furthermore, according to the present invention, the thinner glass sheet may be made of float glass or wired glass, while the thicker glass sheet may be made of heat strengthened glass or toughened glass. This arrangement contributes to cost reduction because the float glass, wired glass, heat strengthened glass and toughened glass are widely distributed to the market and can be readily available.

**Claims**

1. A double glazing unit for windows, comprising two sheets of glass disposed in parallel and spaced a given distance from each other, with the glass sheets being peripherally sealed by a spacer (15) and a sealing material (16) so as to entrap dry gas within a hollow layer (13) interposed between the glass sheets, one glass sheet (12) being a thick glass sheet while the other glass sheet (11) being a thin glass sheet smaller in thickness than the thick glass sheet, **characterized in that** said thick glass sheet (12) has a higher mechanical strength than said thin glass sheet (11).

2. The double glazing unit according to claim 1, wherein said thin glass sheet (11) comprises float glass or wired glass, and said thick glass sheet (12) comprises heat strengthened glass or toughened glass.

FIG.1

11

12

13

D

15

16

10

# FIG.2A

# FIG.2B

## INTERNATIONAL SEARCH REPORT

| International application No. |
| --- |
| PCT/JP01/00252 |

**A. CLASSIFICATION OF SUBJECT MATTER**
Int.Cl$^7$   C03C27/06  E06B3/66

According to International Patent Classification (IPC) or to both national classification and IPC

**B. FIELDS SEARCHED**

Minimum documentation searched (classification system followed by classification symbols)
Int.Cl$^7$   C03C27/06

Documentation searched other than minimum documentation to the extent that such documents are included in the fields searched
Jitsuyo Shinan Koho      1926-1996    Toroku Jitsuyo Shinan Koho  1994-2001
Kokai Jitsuyo Shinan Koho  1971-2001    Jitsuyo Shinan Toroku Koho  1996-2001

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X,Y | JP, 09-203274, A (Asahi Glass Co., Ltd.), 05 August, 1997 (05.08.97), Figs. 1, 2, 4, 5; Par. Nos. 32, 33   (Family: none) | 1,2 |
| X,Y | JP, 07-042451, A (Central Glass Co., Ltd.), 10 February, 1995 (10.02.95), Fig. 1; Par. Nos. 9, 10   (Family: none) | 1,2 |
| Y | Microfilm of the specification and drawings annexed to the request of Japanese Utility Model Application No.126931/1989 (Laid-open No.066318/1991) (Hanamoto Kabushiki Kaisha), 27 June, 1991 (27.06.91), drawings, Brief Explanation of the Drawings (Family: none) | 1,2 |
| Y | JP, 07-330386, A (Nippon Sheet Glass Company, Limited), 19 December, 1995 (19.12.95), Figs. 1, 2; Par. No. 13   (Family: none) | 1,2 |
| PX | JP, 2000-203895, A (Nippon Sheet Glass Company, Limited), 25 July, 2000 (25.07.00), | 1,2 |

☐ Further documents are listed in the continuation of Box C.    ☐ See patent family annex.

| * | Special categories of cited documents: |
| --- | --- |
| "A" | document defining the general state of the art which is not considered to be of particular relevance |
| "E" | earlier document but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 22 March, 2001 (22.03.01) | 03 April, 2001 (03.04.01) |

| Name and mailing address of the ISA/ Japanese Patent Office | Authorized officer |
| --- | --- |
| Facsimile No. | Telephone No. |

Form PCT/ISA/210 (second sheet) (July 1992)

## INTERNATIONAL SEARCH REPORT

| International application No. |
| --- |
| PCT/JP01/00252 |

C (Continuation).   DOCUMENTS CONSIDERED TO BE RELEVANT

| Category* | Citation of document, with indication, where appropriate, of the relevant passages | Relevant to claim No. |
| --- | --- | --- |
| | Fig. 1; Claim 1; Par. No. 14   (Family: none) | |

Form PCT/ISA/210 (continuation of second sheet) (July 1992)